Europäisches Patentamt

European Patent Office

Office européen des brevets

(11) Veröffentlichungsnummer : **0 078 872**
**B1**

(12) # EUROPÄISCHE PATENTSCHRIFT

(45) Veröffentlichungstag der Patentschrift :
21.11.85

(51) Int. Cl.⁴ : **G 01 S 13/52**

(21) Anmeldenummer : **82102139.1**

(22) Anmeldetag : **17.03.82**

---

(54) Anordnung zur Kompensation der Eigenbewegtechos eines Radargerätes.

---

(30) Priorität : **11.11.81 CH 7242/81**

(43) Veröffentlichungstag der Anmeldung :
**18.05.83 Patentblatt 83/20**

(45) Bekanntmachung des Hinweises auf die Patenterteilung : **21.11.85 Patentblatt 85/47**

(84) Benannte Vertragsstaaten :
**CH DE FR GB IT LI NL SE**

(56) Entgegenhaltungen :
**DE-B- 2 133 395**
**DE-B- 2 418 785**
**US-A- 4 062 011**

(73) Patentinhaber : **SIEMENS-ALBIS AKTIENGESELL-
SCHAFT**
**EGA1/Verträge und Patente Postfach**
**CH-8047 Zürich (CH)**

(72) Erfinder : **Grau, Alfred**
**Lerchenberg 19**
**CH-8046 Zürich (CH)**

**Beschreibung**

Die vorliegende Erfindung betrifft eine Anordnung zur Kompensation der Eigenbewegtechos eines Radargerätes gemäss dem Oberbegriff des Patentanspruches 1.

Beim Einsatz von Radargeräten in mobilen Einrichtungen entstehen naturbedingt Eigenbewegtechos, die es dann zu kompensieren gilt, wenn die Eigengeschwindigkeit der Antenne nicht vernachlässigbar klein gegenüber der eines Zieles ist.

Aus der DE-AS-21 33 395 ist bereits ein Doppler-Radargerät mit Festziel-Unterdrückung bekannt, bei dem zwischen dem Ausgang des Kohärenzoszillators und dem Eingang des Phasendiskriminators eine Anordnung zur Kompensation der Eigenbewegung der Sende-/Empfangsantenne eingefügt ist. Diese Kompensationsanordnung besteht aus einer Signalverarbeitungsstufe und einer Mischvorrichtung, die durch die Reihenschaltung eines ersten Mischers, eines ersten Filters, eines zweiten Mischers und eines zweiten Filters gebildet ist. Die Signalverarbeitungsstufe weist eine erste Misch-Schaltung auf, deren Ausgang ein Mischsignal liefert, das dem Eingang einer zweiten Misch-Schaltung zugeführt wird, deren Ausgang mit einem weiteren Eingang des zweiten Mischers der Mischvorrichtung verbunden ist. Die Frequenz dieses Mischsignals entspricht der Summe der Kohärenzoszillatorfrequenz, der Eigenbewegungsdopplerfrequenz und einer zusätzlichen Verschiebungsfrequenz, die aus Symmetriegrüden zu etwa Fr/4 gewählt ist, wobei Fr die Folgefrequenz der ausgesendeten Impulse ist. Die erste Misch-Schaltung gibt ein weiteres Ausgangssignal ab, mit dem ein weiterer Eingang des ersten Mischers der Mischvorrichtung beaufschlagt ist.

Die aus der DE-AS-21 33 395 bekannte Anordnung arbeitet in der Weise, dass die von Zielen reflektierten Signale mit dem Ausgangssignal eines Kohärenzoszillators in der Phase verglichen und nur die Signale, deren Phasenlagen sich gegenüber dem Kohärenzoszillator bei zwei aufeinanderfolgenden Antennenumläufen ändern, als Signale von bewegten Zielen erkannt, ausgewertet und angezeigt werden. Dabei wird zur Kompensation der Eigenbewegung die Relativgeschwindigkeit der Sende-/Empfangsantenne zu einem Festziel ermittelt und die Frequenz des Kohärenzoszillators um die Frequenz der zu dieser Relativgeschwindigkeit gehörenden Dopplerverschiebung nachgeregelt, wobei die Relativgeschwindigkeit zu einem Festziel gemessen wird, das von der Sende-/Empfangsantenne weniger weit als das zu ortende Ziel entfernt ist.

Aus der DE-AS-24 18 785 ist ein Puls-Doppler-Radargerät bekannt, bei dem die Signalverarbeitungsstufe der Kompensationsanordnung einen Phasendiskriminator und zwei Oszillatoren umfasst, wobei das Ausgangssignal der Signalverarbeitungsstufe eine Frequenz aufweist, die der Summe der Frequenz des Ausgangssignals eines Signalgenerators und der Frequenz eines mit der Dopplerfrequenz der Eigenbewegtechos modulierten Verschiebungssignals entspricht, dessen Mittenfrequenz bei fehlender Eigenbewegung ein Vielfaches der Pulsfrequenz des Radargerätes ist. Eine solche Signalverarbeitungsstufe gibt jedoch nur ein einziges Signal ab, das in einem Mischer mit dem sogenannten ersten Zwischenfrequenzsignal gemischt wird, und kann daher nicht ohne weiteres zur Kompensation der Eigenbewegtechos in ein Radargerät nach dem Oberbegriff des Patentanspruches 1 eingesetzt werden.

Zweck der vorliegenden Erfindung ist es, eine Signalverarbeitungsstufe anzugeben, die in eine Anordnung nach dem Oberbegriff des Anspruches 1 eingesetzt werden kann, um die Echos zu kompensieren, die durch die Eigengeschwindigkeit der Antenne eines Radargerätes hervorgerufen werden.

Dies wird erfindungsgemäss durch die im kennzeichnenden Teil des Anspruchs 1 angegebenen Massnahmen erreicht.

Vorteilhafte Ausgestaltungen der Erfindung sind in weiteren Ansprüchen angegeben. Die Erfindung wird nun durch Beschreibung von Ausführungsbeispielen anhand der Zeichnungen näher erläutert. Dabei zeigt :

Figur 1   das Blockschaltbild eines Doppler-Radargerätes mit einer erfindungsgemässen Anordnung zur Kompensation der Eigenbewegtechos,

Figur 2   das Blockschaltbild einer Signalverarbeitungsstufe zu einer solchen Kompensationseinrichtung,

Figur 3   das Blockschaltbild zweier Phasenregelkreis-Schaltungen zu einer solchen Signalverarbeitungsstufe.

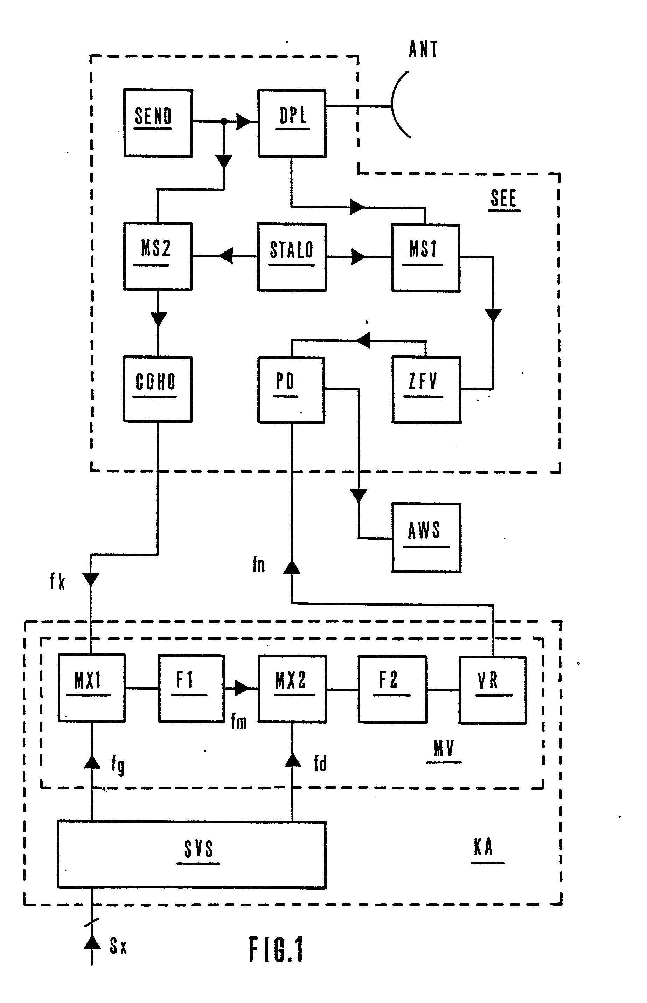

Das in Fig. 1 dargestellte Doppler-Radargerät weist eine Antenne ANT, eine Sende-/Empfangseinrichtung SEE, eine Auswerteschaltung AWS sowie eine Kompensationsanordnung KA auf, die aus einer Signalverarbeitungsstufe SVS und einer Mischvorrichtung MV besteht. Die Sende-/Empfangseinrichtung SEE weist einen Sender SEND auf, dessen Ausgang an den ersten Anschluss eines mit der Antenne verbundenen Duplexers DPL angeschlossen ist, dessen Ausgang über die Reihenschaltung einer ersten Mischstufe MS1, eines Zwischenfrequenzverstärkers ZFV und eines Phasendiskriminators PD mit dem Eingang der Auswerteschaltung AWS verbunden ist. Der Sender SEND ist ausserdem über die Reihenschaltung einer zweiten Mischstufe MS2 und eines Kohärenzoszillators COHO mit dem Eingang eines Mischers MX1 in der Mischvorrichtung MV verbunden. Dabei sind weitere Eingänge der Mischstufen MS1 und MS2 mit je einem Ausgangssignal eines stabilisierten Oszillators STALO beaufschlagt. Die Mischvorrichtung MV besteht aus der Reihenschaltung des Mischers MX1, eines Filters F1, eines zweiten Mischers MX2, eines Filters F2 und eines Verstärkers VR, dessen Ausgang mit einem weiteren Eingang des Phasendiskriminators PD verbunden ist. Die eingangsseitig mit einem Signal Sx beaufschlagte Signalverarbeitungsstufe SVS liefert zwei Ausgangssignale Sg und Sd, wobei im Mischer MX1 das Signal Sg der Frequenz fg und das Ausgangssignal Sk der Frequenz fk des Kohärenzoszillators COHO und im Mischer MX2 das Signal Sd der Frequenz fd = fg ± fc und das Ausgangssignal Sm der Frequenz fm = fg ± fk des Filters F1 gemischt werden.

Das Radargerät nach Fig. 1 funktioniert somit in der Weise, dass die Mischvorrichtung MV ein Ausgangssignal Sn abgibt, dessen Frequenz

$$fn = fd - fm = fg \pm fc - fg \pm fk = \pm (fk \pm fc)$$

ist, wobei die Frequenzdifferenz fd − fg dem mit Vorzeichen behafteten Wert der Dopplerfrequenz fc der Antennenbewegung entspricht. Wenn beispielsweise Vc die zum Boden relative Geschwindigkeit der Antenne selbst ist, so glit für die Dopplerfrequenz fc die Beziehung fc = 2 Vc/d, worin d die Wellenlänge des Sendesignals ist. Im übrigen ist die Arbeitsweise des Radargerätes ohne die Kompensationsanordnung KA bekannt, die für den Fall, dass die Frequenz fc = 0, das heisst fn = fk, sein sollte, durch eine direkte Verbindung zwischen dem Ausgang des Kohärenzoszillators COHO und dem Eingang des Phasendiskriminators PD ersetzt werden kann.

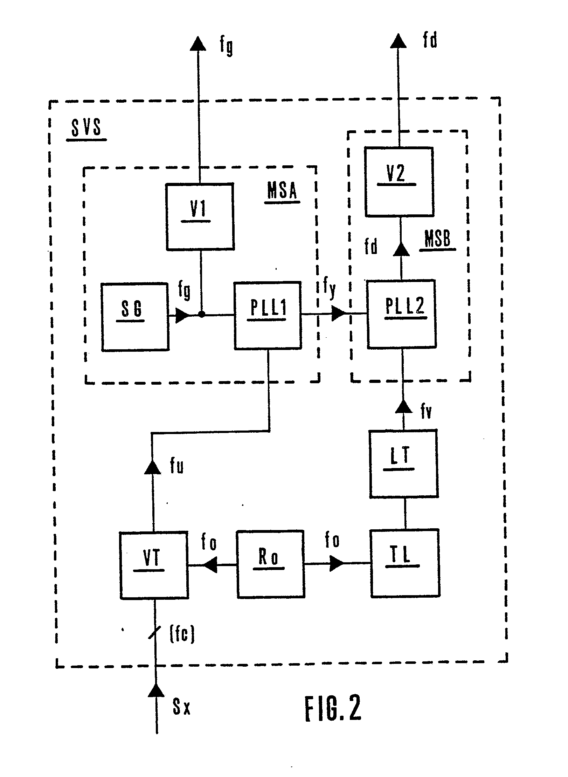

Die Signalverarbeitungsstufe SVS gemäss Fig. 2 weist einen Signalgenerator SG auf, dessen Ausgang einerseits über einen ersten Verstärker V1 mit dem Eingang des ersten Mischers MX1 (Fig. 1) und andererseits über die Reihenschaltung zweier Phasenregelkreis-Schaltungen PLL1 und PLL2 und eines zweiten Verstärkers V2 mit dem Eingang des zweiten Mischers MX2 verbunden ist. In der Signalverarbeitungsstufe SVS ist zudem ein Referenzoszillator Ro der Frequenz fo mit zwei entkoppelten Ausgängen vorhanden, von denen der eine über die Reihenschaltung eines Teilers TL und eines Leitungstreibers LT mit einem zweiten Eingang der zweiten Phasenregelkreis-Schaltung PPL2 verbunden ist. Der andere Ausgang des Referenzoszillators Rò ist über einen variablen Teiler VT mit einem zweiten Eingang der Schaltung PLL1 verbunden, wobei der Teiler VT durch ein aus der Information über die Radialgeschwindigkeit der Peilachse (Boresignt) der Antenne gewonnenes 8-Bitwort-Signal gesteuert wird, das der Dopplerfrequenz fc entspricht.

Die Signalverarbeitungsstufe SVS funktioniert folgendermassen :

Der Referenzoszillator Ro gibt ein Signal So der Frequenz fo ab, die im Teiler TL unterteilt wird, so dass am Ausgang des Treibers LT ein Signal der Frequenz fv erscheint. Das Signal So wird im Teiler VT nach Massgabe des Signals Sx derart unterteilt, dass am Ausgang desselben ein Signal der Frequenz fu = fv ± fc vorliegt. Der Ausgang der Schaltung PLL1 gibt somit ein Signal der Frequenz fy = fu + fg = fg + fv ± fc ab, worin fg und fv konstante und fc variable Werte aufweisen. Die Phasenregelkreis-Schaltungen PLL1 und PLL2 enthalten bekanntlich einen Tiefpass, der nicht ohne weiteres mit einer unteren Grenzfrequenz fa = 0 realisiert werden kann. Um diese Schwierigkeit zu umgehen, wird fv = K · fa gewählt, worin der Faktor K > 1 sein muss und beispielsweise einen Wert zwischen 50 und 50 000 annehmen kann. Die Schaltung PLL2 gibt somit ein Ausgangssignal ab, dessen Frequenz fd = fy − fv = fg + fv ± fc − fv = fg ± fc ist. Für die Frequenz des Ausgangssignals der Mischvorrichtung MV (Fig. 1) gilt daher

$$fn = fd - fm = fk \pm fc.$$

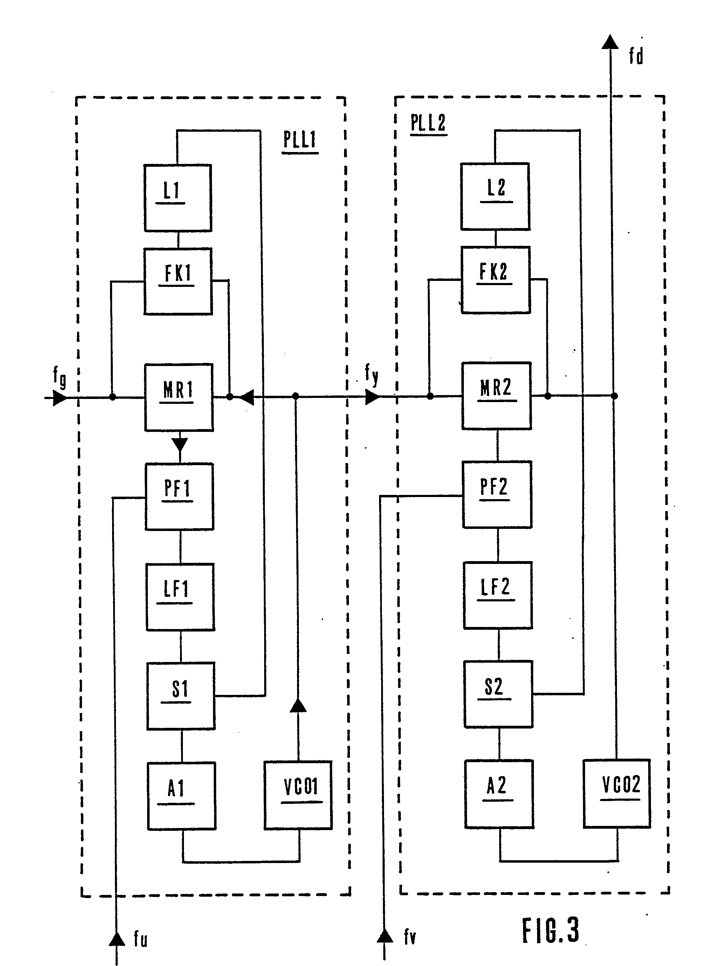

Die Schaltung PLL1 nach Fig. 3 weist einen Mischer MR1 auf, dessen Ausgang über die Reihenschaltung eines Phasenfrequenz-Detektors PF1, eines Tiefpasses LF1, eines Summierers S1 und eines Verstärkers A1 mit dem Eingang eines Spannungsgesteuerten Oszillators VCO1 verbunden ist, dessen Ausgang das Signal Sy der Frequenz fy abgibt. Der Mischer MR1 mischt die Signale der Frequenzen fo und fy, die zudem in einem Frequenzkomparator FK1 verglichen werden, dessen Ausgangssignal über einen Begrenzer L1 dem zweiten Eingang des Summierers S1 zugeführt wird. Der Phasenfrequenz-Detektor PF1 weist einen weiteren Eingang für das Signal der Frequenz fu auf. Wird ein spannungsgesteuerter, in der Frequenz ziehbarer Quarzoszillator gewählt, so entfallen die Elemente L1, FK1 und S1. Entsprechendes gilt für die Schaltung PLL2, die ähnlich aufgebaut sein kann.

**Patentansprüche**

1. Anordnung zur Kompensation der Eigenbewegtechos eines Radargerätes mit einer zwischen dem Ausgang eines Kohärenzoszillators (COHO) und dem Eingang eines Phasendiskriminators (PD) eingefügten Mischvorrichtung (MV), die die Reihenschaltung eines ersten Mischers (MX1), eines ersten Filters (F1), eines zweiten Mischers (MX2) und eines zweiten Filters (F2) aufweist, wobei eine Signalverarbeitungsstufe (SVS) mit zwei in Reihe geschalteten Misch-Schaltungen (MSA, MSB) vorhanden ist, die je ein Signal abgeben, deren Frequenzdifferenz (fd − fg) dem Wert der Dopplerfrequenz (fc) der Eigenbewegtechos entspricht, von denen das erste Signal dem ersten Mischer (MX1) und das zweite Signal dem zweiten Mischer (MX2) zugeführt wird, und wobei die Frequenz (fy) des Ausgangssignals der ersten Misch-Schaltung (MSA) durch Hinzuziehen der Dopplerfrequenz (fc) der Eigenbewegtechos gebildet

3

wird, dadurch gekennzeichnet, dass in der ersten Misch-Schaltung (MSA) der Signalverarbeitungsstufe (SVS) eine Phasenregelkreis-Schaltung (PLL1) vorhanden ist, deren Ausgangssignal eine Frequenz (fy) aufweist, die der Summe der Frequenz (fg) des Ausgangssignals eines Signalgenerators (SG) und der Frequenz (fu = fv ± fc) eines mit Dopplerfrequenz (fc) der Eigenbewegtechos modulierten Verschiebungssignals entspricht, und dass in der zweiten Misch-Schaltung (MSB) das Ausgangssignal dieser Phasenregelkreis-Schaltung (PLL1) und ein weiteres Signal gemischt werden, dessen Frequenz gleich der Frequenz (fv) des Verschiebungssignals ist.

2. Anordnung nach Anspruch 1, dadurch gekennzeichnet, dass die zweite Misch-Schaltung (MSB) eine weiter Phasenregelkreis-Schaltung (PLL2) aufweist.

3. Anordnung nach Anspruch 1 oder 2, dadurch gekennzeichnet, dass in der Signalverarbeitungsstufe (SVS) ein Referenzoszillator (Ro) vorhanden ist, dessen Ausgangssignal (So) einerseits über einen Frequenzteiler (TL) dem Kohärentsignal-Eingang der zweiten Misch-Schaltung (MSB) und andererseits über einen variablen Teiler (VT) einem zweiten Eingang der Phasenregelkreis-Schaltung (PLL1) zugeführt wird, und dass der variable Teiler (VT) nach Massgabe der Dopplerfrequenz (fc) der Eigenbewegtechos gesteuert ist.

## Claims

1. An arrangement for compensating the self-moving echo of a radar device, with a mixing device (MV), inserted between the output of a coherent oscillator (COHO) and the input of a phase discriminator (PD), which contains the series arrangement of a first mixer (MX1), a first filter (F1), a second mixer (MX2) and a second filter (F2), where a signal processing stage (SVS) is provided which contains two series connected mixer circuits (MSA, MSB), each of which emits a signal whose frequency difference (fd − fg) corresponds to the value of the Doppler frequency (fc) of the self-moving echo, the first signal is fed to the first mixer (MX1) and the second signal is fed to the second mixter (MX2), and the frequency (fy) of the output signal of the first mixer circuit (MSA) is formed by pulling up the Doppler frequency (fc) of the self-moving echo, characterised in that in the first mixer circuit (MSA) of the signal processing stage (SVS) a phase-locked loop (PLL1) is arranged whose output signal has a frequency (fy) which corresponds to the sum of the frequency (fg) of the output signal of a signal generator (SG) and the frequency (fu = fv ± fc) of a shift signal which is modulated with the Doppler frequency (fc) of the self-moving echo, and that in the second mixer circuit (MSB) the output signal of this phase-locked loop (PLL1) is mixed with a further signal whose frequency is equal to the frequency (fv) of the shift signal.

2. An arrangement as claimed in Claim 1, characterised in that the second mixer circuit (MSB) contains a further phase-locked loop (PLL2).

3. An arrangement as claimed in Claim 1 or 2, characterised in that the signal processing stage (SVS) contains a reference oscillator (Ro) whose output signal (So) is fed via a frequency divider (TL) to the coherent signal input of the second mixer circuit (MSB) and is fed via a rabiable divider (VT) to a second input of the phase-locked loop (PLL1), and that the variable divier (VT) is controlled in accordance with the Doppler frequency (fc) of the self-moving echo.

## Revendications

1. Dispositif pour compenser les échos dus au déplacement propre d'un appareil radar comportant un dispositif mélangeur (MV), inséré entre la sortie d'un oscillateur cohérent (COHO) et l'entrée d'un discriminateur de phase (PD) et qui comporte le montage en série d'un premier mélangeur (MX1), d'un premier filtre (F1), d'un second mélangeur (MX2) et d'un second filtre (F2), et dans lequel il est prévu un étage (SVS) de traitement des signaux comportant deux circuits mélangeurs (MSA, MSB) branchés en série et qui délivrent des signaux respectifs dont la différence de fréquence (fd − fg) correspond à la valeur de la fréquence Doppler (fc) des échos dus au déplacement propre et parmi lesquels le premier signal est envoyé au premier mélangeur (MX1) et le second signal est envoyé au second mélangeur (MX2), et dans lequel la fréquence (fy) du signal de sortie du permier circuit mélangeur (MSA) est formée par l'adjonction de la fréquence Doppler (fc) des échos dus au déplacement propre, caractérisé par le fait qu'il est prévu dans le premier circuit mélangeur (MSA) de l'étage (SVS) de traitement des signaux, un circuit à boucle de régulation de phase (PLL1), dont le signal de sortie possède une fréquence (fy) qui correspond à la somme de la fréquence (fg) du signal de sortie d'un générateur de signaux (SG) et de la fréquence (fu = fv ± fc) d'un signal de décalage modulé avec la fréquence Doppler (fc) des échos dus au déplacement propre et que le signal de sortie de ce circuit à boucle de régulation de phase (PLL1) et un autre signal, dont la fréquence est égale à la fréquence (fv) du signal de décalage, sont mélangés dans le second circuit mélangeur (MSB).

2. Dispositif selon la revendication 1, caractérisé par le fait que le second circuit mélangeur (MSB) comporte un circuit à boucle de régulation de phase (PLL2).

3. Dispositif suivant la revendication 1 ou 2, caractérisé par le fait que l'étage (SVS) de traitement des signaux contient un oscillateur de référence (Ro), dont le signal de sortie (So) est envoyé d'une part par

**0 078 872**

l'intermédiaire d'un diviseur de fréquence (TL) à l'entrée du signal cohérent du second circuit mélangeur (MSB) et d'autre part par l'intermédiaire d'un diviseur variable (VT) à une seconde entrée du circuit à boucle de régulation de phase (PLL1) et que le diviseur variable (VT) est commandé en fonction de la fréquence Doppler (Fc) des échos dus au déplacement propre.

5

FIG.1

FIG.2

FIG.3